Europäisches Patentamt

European Patent Office

Office européen des brevets

(11) Publication number: **0 312 333 B1**

# EUROPEAN PATENT SPECIFICATION

(45) Date of publication of patent specification: **26.01.94**

(51) Int. Cl.5: **B65D 81/34**, B32B 15/08, H05B 6/64

(21) Application number: **88309556.4**

(22) Date of filing: **12.10.88**

(54) Microwave absorbing composite.

(30) Priority: **15.10.87 US 109226**

(43) Date of publication of application:
**19.04.89 Bulletin 89/16**

(45) Publication of the grant of the patent:
**26.01.94 Bulletin 94/04**

(84) Designated Contracting States:
**BE DE FR GB IT SE**

(56) References cited:
**EP-A- 0 242 952**
**EP-A- 0 251 445**
**EP-A- 0 270 838**
**US-A- 4 190 757**

(73) Proprietor: **MINNESOTA MINING AND MANU-FACTURING COMPANY**
**3M Center,**
**P.O. Box 33427**
**St. Paul, Minnesota 55133-3427(US)**

(72) Inventor: **Emslander, Jeffrey O. c/o Minnesota Mining and**
**Manufacturing Company**
**2501 Hudson Road**
**St.Paul Minnesota 55133-3427(US)**

Inventor: **Larson, Curtis L. c/o Minnesota Mining and**
**Manufacturing Company**
**2501 Hudson Road**
**St.Paul Minnesota 55133-3427(US)**
Inventor: **LePere, Pierre H. c/o Minnesota Mining and**
**Manufacturing Company**
**2501 Hudson Road**
**St.Paul Minnesota 55133-3427(US)**

(74) Representative: **Baillie, Iain Cameron et al**
**c/o Ladas & Parry**
**Altheimer Eck 2**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to composites that are capable of absorbing microwave energy and to packages having such composites applied thereto. These composites are commonly referred to as susceptors.

It is well-known that thin metallic coatings borne on a polymeric sheet will generate heat when placed in a standard microwave oven.

U.S. Patent No. 4,190,757 discloses a food package composed of a paperboard carton and a lossy microwave energy absorber which becomes hot when exposed to microwave radiation. The absorber is associated in conductive heat transfer relationship with a food product contained in the package and is usually bonded to a structural supporting sheet. The package also includes a shield, e.g., a metal foil sheet adapted to reduce by a controlled amount the direct transmission of microwave energy into the food product. The absorber heats the adjacent surface of the food by conduction to a sufficiently high temperature to provide searing or browning while controlled microwave exposure heats the inside.

U.S. Patent No. 4,230,924 discloses a food package including a flexible wrapping sheet of dielectric material, such as polyester or paperboard, capable of conforming to at least a portion of the article of food's shape. The dielectric wrapping sheet has a flexible metallic coating thereon, such as aluminum, in the form of a relatively thin film or relatively thick foil subdivided into a number of individual metallic islands or pads separated by criss-crossing non-metallic gaps provided by exposed dielectric strips on the wrapping sheet. When the food package is placed in a microwave oven, some of the microwave energy passes through the wrapping sheet so as to dielectrically heat the food item, but a lesser amount of the microwave energy is converted into thermal energy by the metallic coating so as to brown or crispen that portion of the food adjacent thereto.

U.S. Patent No. 4,267,240 discloses a food package of plastic film or other dielectric substrate having a very thin coating thereon which absorbs the microwave energy when the package is placed within a conventional microwave oven. The plastic film or other substrate and its coating conform to a substantial surface portion of the food item. The coated plastic film or other substrate converts some of the microwave energy into heat which is transmitted directly to the surface portion of the food so that a browning and/or crispening is achieved.

In the case of susceptors employing thin metal coatings on a polymeric substrate, only a certain amount of heating can be achieved with a given metal before it begins to arc and destroy the polymeric sheet as well as the metallic coating itself. Arcing may also adversely affect the oven, and in some circumstances may even result in a fire.

For metallized films, there is a certain metal thickness that results in maximum microwave heating without arcing. This optimum metal thickness depends on a number of factors such as the nature of the metal itself, the uniformity of the metallic coating, the amount of oxygen and other impurities in the coating, and surface characteristics of the film substrate. Due to these factors, arcing may occur at the film thickness required for optimum heating. Thus, the arcing phenomenon may limit the amount of heat capable of being safely generated from a given single layer construction.

EP-A-251,445 and EP-A-270,838 which form part of the state of the art against the present application only by virtue of Article 543(3) EPC, both disclose microwave-absorbing composites having two layers of microwave-absorbing material. However they do not disclose an adhesive layer on the composite, they do not disclose such a composite with a microwave-absorbing layer on the exterior thereof and they do not disclose composites having three or more microwave-absorbing layers.

Accordingly the invention provides a microwave-absorbing composite comprising at least two zones (12,14) of material capable of absorbing microwave energy, each pair of said microwave energy absorbing zones being separated by a zone of material transparent to microwave energy, said composite having a layer of adhesive (20) on a major exterior surface thereof, provided that said composite is incapable of arcing in a microwave oven whereof the maximum power output does not exceed 2000 watts at a frequency of 2.45 GHz.

The invention also provides a microwave absorbing composite comprising at least two zones (12,14) of material capable of absorbing microwave energy, each pair of said microwave energy-absorbing zones being separated by a zone of material transparent to microwave energy and one of said microwave energy-absorbing zones being on the exterior of the composite, provided that said composite is incapable of arcing in a microwave oven whereof the maximum power output does not exceed 2000 watts at a frequency of 2.45 GHz.

The invention also provides a microwave absorbing composite comprising at least three zones of material capable of absorbing microwave energy, each pair of said microwave energy absorbing zones being separated by a zone of material transparent to microwave energy, provided that said composite is incapable of arcing in a microwave oven whereof the maximum power output does not exceed 2000 watts at a frequency of 2.45 GHz.

A layer of adhesive, e.g. a pressure-sensitive adhesive, can be used as a zone of microwave transparent material itself or to bond a microwave absorbing zone to a microwave transparent zone that does not have adhesive characteristics. A layer of adhesive can also be used to bond the composite to a package or other article.

The major advantage of the composite of this invention is that the composite can absorb significantly more microwave energy from such sources as a microwave oven without undergoing arcing than can a susceptor having only a single microwave absorbing zone. The composite can therefore develop heat at a faster rate, without arcing, when employed as a microwave susceptor than can a susceptor having only a single microwave absorbing zone.

The microwave absorbing composite can be used for crisping, browning, or otherwise heating food products. The microwave absorbing composite can be used as a packaging material, e.g. package walls, or package insert. The microwave absorbing composite can, in addition, be used as a package venting material.

Preferred embodiments of the invention are described below by way of example only with reference to Figures 1 to 3 of the accompanying drawings wherein:-

FIG. 1 is a sectional view of one embodiment of the composite of this invention.

FIG. 2 is a schematic diagram showing how incident, reflected, and transmitted waves travel through the composite of this invention.

FIG. 3 is a graph depicting the level of temperature rise as a function of the number of microwave absorbing zones in the composite.

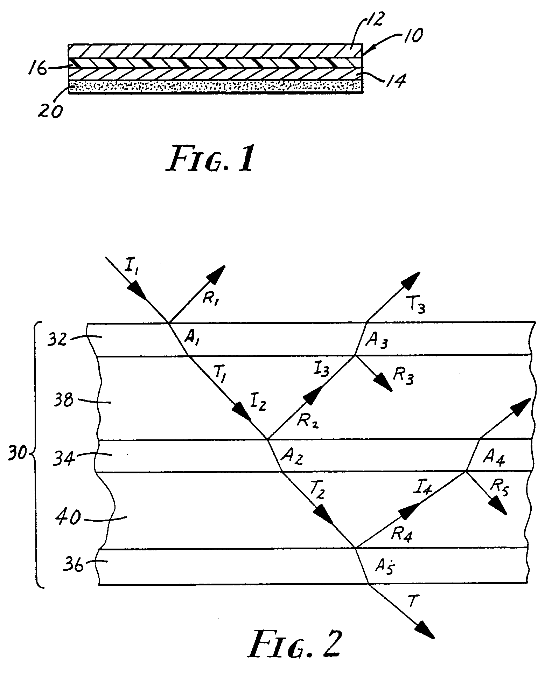

Referring now to FIG. 1, which depicts a preferred embodiment of the invention, microwave absorbing composite 10 comprises two zones 12, 14 comprising material capable of absorbing microwave energy, one zone 16 comprising material transparent to or transmissive of microwave energy, and one layer 20 of adhesive applied to microwave absorbing layers 14. However, layer 20 is optional, and the composite of this invention can operate satisfactorily without a layer of adhesive applied thereon as claimed in claim 5.

As used herein, the phrase "capable of absorbing microwave energy" means capable of interacting with microwave energy so as to transform the microwave energy into infrared radiation or sensible heat. A material capable of absorbing microwave energy preferably has a dissipation factor of greater than about 0.5 when tested in accordance with ASTM D 150 at a frequency of 1 GHz. The phrase "transparent to or transmissive of microwave energy" means not wholly absorptive of microwave energy, thereby allowing transmission of such energy. A material transparent to and transmissive of microwave energy preferably has a dissipation factor of less than about 0.5, more preferably less than about 0.2, when tested in accordance with ASTM D 150 at a frequency of 1 GHz. As used herein, the term "zone" means a region or area set off as distinct from adjoining parts whether having a sharp interfacial boundary or a gradual change. For example, a microwave energy absorbing zone can comprise one or more layers of material capable of absorbing microwave energy and a zone of material transparent to or transmissive of microwave energy can comprise one or more layers of insulative material.

Microwave energy absorbing zones 12, 14 can be formed of layers of electrically conductive material. A layer of electrically conductive material can be made of a single metal, a mixture of metals, an oxide of a metal, a mixture of oxides of metals, a dispersion of conductive metallic or non-metallic materials in a binder, or any combination of the foregoing. Metals that are suitable for the conductive layer include aluminum, iron, tin, tungsten, nickel, stainless steel, titanium, magnesium, copper, and chromium. Metal oxides that are suitable for use in the conductive layer include aluminum oxide, iron oxide, and tin oxide. Materials that are not electrically conductive, e.g. aluminum oxide, can only be used in conjunction with electrically conductive material. Materials that are suitable for dispersions include carbon black, graphite, powdered metals, and metal whiskers. The conductive metallic layer can be applied to a layer of material transparent to microwave energy by means of such processes as evaporative vacuum deposition, sputtering, ion plating, and electroplating.

In general, microwave energy absorbing zones 12, 14 can be designed to be sufficiently thin to prevent arcing, and sufficiently thick to absorb sufficient microwave energy for the intended purpose of composite 10. For example, if the microwave absorbing composite is to be used for heating, zones 12, 14 must be sufficiently thick to provide sufficient thermal energy to heat the surface of the product undergoing exposure to microwave energy. When formed from an electrically conductive material, the thickness of the microwave energy absorbing zone can vary from 10 to 1000 Angstroms for deposited metals, 200 to 2000 Angstroms for metal/metal oxide deposits, and 2.54 $\mu$m to 635 $\mu$m (0.1 to 25 mils) for conductive dispersions. However, it is preferred that the resistivity of each of the electrically conductive zones be greater than about 30 ohms per square in order to prevent arcing or the development of concentrated hot spots which could cause excessive scorching, burning, or melting of the package or its contents, alarm the user, or damage the microwave heating apparatus.

The shielding effects of the multi-zone construction allow combinations of metallic layers to be used without arcing even though some of the layers would arc if used individually. However, the microwave energy absorbing zones must be prepared in such a way that the composite will be incapable of arcing in a microwave oven whereof the maximum output does not exceed 2000 watts at a frequency of 2.45 GHz.

The resistivity at which arcing occurs can vary with the material of the microwave energy absorbing zone. For example, evaporative vacuum deposited aluminum has been observed to arc at resistivities less than 30 ohms per square, evaporative vacuum deposited stainless steel has been observed to arc at resistivities less than 250 ohms per square, uniform dispersions have been observed to arc at resistivities less than 100 ohms per square, nonuniform dispersions have been observed to arc at overall resistivities greater than several hundred ohms per square.

The following guidelines can generally be used to prepare microwave energy absorbing zones:

| Material | Thickness $1 \mu m = 10^4$ Å | Resistivity (ohms/sq.) |
|---|---|---|
| Vacuum deposited metal | 10 - 1000 Å | 40 - 600 |
| Vacuum deposited metal oxide | 20 - 2000 Å | 100 - 2000 |
| Vacuum deposited alloys | 10 - 1500 Å | 40 - 2000 |
| Conductive dispersion | 2.54 to 635 $\mu m$ (0.1 - 25 mil) | 200 - 4000 |

The microwave energy absorbing zones interact with the electric and/or magnetic components of the microwave energy. A portion of the microwave energy falling on a specific microwave energy absorbing zone is reflected, a portion transmitted through the zone, and a portion absorbed by the zone -- the absorbed energy being converted into heat. If $Z_a$ represents the impedance of the microwave energy absorbing zone and $Z_o$ the impedance of the medium through which the microwave energy strikes the microwave energy absorbing zone, the reflection factor for the microwave energy absorbing zone is given by the equation:

$$R = (Z_a - Z_o)/(Z_a + Z_o).$$

Thus, for minimum reflection (maximum absorption), the impedance of the microwave energy absorbing zone should equal that of the medium through which the incident microwave energy approaches. In general, a microwave energy absorbing zone absorbs a maximum amount of microwave energy when its impedance matches that of the adjacent medium through which the microwave energy is incident. For example, if a single microwave energy absorbing zone is struck by microwave energy contacting it through air, the impedance of the microwave energy absorbing zone should theoretically be 377 ohms per square, the impedance of free space, for optimum absorption to occur.

In composites having more than one microwave energy absorbing zone, each microwave energy absorbing zone converts microwave energy into heat in proportion to the amount of microwave energy absorbed.

Although there is no theoretical limit as to the number of microwave energy absorbing zones that can be contained in the composite of this invention, practical considerations, e.g, cost, size, typically limit the maximum number of microwave energy absorbing layers to ten or fewer.

Zone 16 acts to separate microwave energy absorbing zones 12, 14. Because zone 16 is transparent to microwave energy, it does not contribute significantly to the overall microwave heating capability of composite 10. In fact, since zone 16 has mass and specific heat capacity, it acts as a thermal load on the overall heating of composite 10, tending to reduce the overall heat output thereof.

Zone 16 is preferably made of a polymeric film, which can be oriented or unoriented. Materials that have been found to be useful in the present invention for zone 16 include polyolefins, polyesters, polyamides, polyimides, polysulfones, polyether ketones, cellophanes, and blends of the foregoing. Zone 16 can also be made of other electrically nonconductive materials, e.g. paper and laminates comprising paper, aluminum oxide, sodium silicate, cellulosics, e.g. nitrocellulose and zinc sulfide. A portion of zone 16 can comprise gaps consisting of air. If the material of zone 16 is sufficiently thick, it can provide support to microwave energy absorbing zones 12,14.

Layers of adhesive can be used to adhere a microwave energy absorbing zone to a zone transparent to microwave energy. A layer of adhesive can also be disposed between two microwave energy absorbing zones. By this means, the adhesive layer itself can function as the zone of material transparent to microwave energy. It is preferred that the adhesive have sufficient thermal stability to prevent zones to which it is adhered from separating or curling during the operation of the microwave absorbing composite.

It is preferred that the adhesive that comprises optional adhesive layer 20 maintain adequate physical properties at temperatures up to about 232°C, (450°F). It is also preferred that the adhesive of layer 20 have sufficient tack to adhere composite 10 to substrates on initial contact. As composite 10 heats in response to microwave energy, the adhesive of layer 20 preferably maintains sufficient mechanical strength to overcome any distortion forces so that composite 10 does not curl or slip relative to the substrate to which it is adhered.

It is preferred to use pressure-sensitive adhesives for adhesive layer 20. Pressure-sensitive adhesives that have been found to be useful in the present invention include silicone-based adhesives, e.g. polysiloxanes, acrylic-based adhesives, e.g. isooctyl acrylate/acrylic acid copolymers, rubber-based adhesives, e.g. styrene-isoprene-styrene block copolymers, styrene-butadiene-styrene block copolymers, and nitrile rubbers, e.g. acrylonitrile-butadiene.

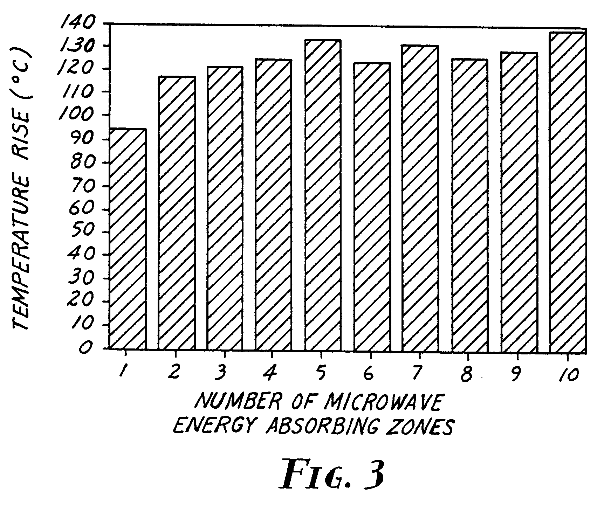

The major advantage of the composite of this invention is that the composite can absorb significantly more microwave energy from sources of microwave energy, e.g. a microwave oven, without undergoing arcing than can a susceptor having only a single microwave absorbing zone, even if that single zone contains as much microwave energy absorbing material as does the composite. While not wishing to be bound by any theory, it is believed that the invention provides its unexpected advantages due to reflections of the microwave energy at the interface of microwave energy absorbing zones and the zones transparent to microwave energy. Referring now to FIG. 2, composite 30 comprises three microwave energy absorbing zones 32, 34 and 36, and two zones 38 and 40 that are transparent to microwave energy. At first microwave energy absorbing zone 32, a portion of the incident microwave energy ($I_1$) is reflected ($R_1$) by microwave energy absorbing zone 32, a portion absorbed ($A_1$) and converted into heat, and a portion transmitted ($T_1$). This microwave energy transmitted through first microwave energy absorbing zone 32 becomes the incident energy ($I_2$) for second microwave energy absorbing zone 34 for which a portion is reflected ($R_2$), a portion absorbed ($A_2$), and a portion transmitted ($T_2$). This continues on for the number of microwave energy absorbing zones, e.g. zone 36, employed in composite 30. It must also be noted that the energy reflected from second microwave energy absorbing zone 34 ($R_2$) becomes incident on first microwave energy absorbing zone 32 ($I_3$) for which a portion is again absorbed ($A_3$), reflected ($R_3$), and the remainder transmitted ($T_3$). As can be seen, the multiple-zone construction is capable of creating more overall microwave energy absorption (and subsequent heating) than a single-zone construction. However, because of the shielding effects of the zones (i.e. $I_1 > I_2 > I_3$, etc.) there is a limit to the effectiveness of the multiple-zone structure with respect to microwave heating, depending on the balance of transmission, absorption, and reflection for a given material. Another factor contributing to the overall heat output of the multiple-zone construction is the thermal mass associated with each zone. Part of the heat developed by each microwave energy absorbing zone goes into heating the thermal mass of the non-absorbing components 38, 40 of composite 30 (e.g. adhesive layers, zones transparent to microwave energy). In effect, the thinner the non-absorbing components 38, 40 of composite 30, the less their thermal mass and the more efficient the total heat production of composite 30.

The following, non-limiting examples further illustrate the present invention.

## Example 1

This example demonstrates the relative heating effects of composites having up to 10 layers of microwave absorbing material. Effectiveness was determined by recording the temperature rise of a thermal load provided by two polycarbonate blocks which are placed above and below the composite.

Tape was prepared by first vacuum depositing aluminum onto one major surface of 1 mil, biaxially oriented polyethylene terephthalate (PET) film (3M #860092) to a level of 50% optical transmission as measured by a MacBeth® model 110 optical densitometer, then knife coating a pressure-sensitive adhesive onto the aluminized surface of the film using a 5 mil orifice. The adhesive was dried 10 minutes in a forced-air oven at 65.6°C (150°F), yielding an adhesive coating weight of 30g/m² (8.0 grains per 24 sq.in.) The adhesive was a 53% solids emulsion in water, and was prepared from the following ingredients in the amounts indicated:

87 wt. % isooctylacrylate

12 wt. % tertiary octylacrylamide

1 wt. % sodium styrene sulfonate

The adhesive also contained 0.3 wt.% emulslfier ("Siponate DS-10", Alcolac Chemical Corp.). The concentration of emulsifier was based on the combined weight of the three ingredients listed.

Multi-layer composites were constructed by laminating one piece of aforementioned tape to the backing of another to form the desired number of layers. Test samples of the multi-layer composite structures were die-cut to 33.3mm x 33.3mm (1 5/16 in. x 1 5/16 in.) and adhered to the top major surface of a 50.8mm x 50.8mm x 4.8mm (2 in. x 2 in. x 3/16 in.) polycarbonate block ("Lexan", General Electric Co.). An identical polycarbonate block was placed on top of the sample and the two blocks held together with three small rubber bands. Total mass of the two polycarbonate blocks was 26 grams. A 1.6mm (1/16 in.) hole was drilled through the center of a side face of the lower block and extending to the center of the block to receive a Luxtron Fluoroptic® probe to monitor the temperature of the block during the microwave heating test.

One-by-one, test samples were centered on the floor of a 0.023m$^3$ (0.8 cu.ft.), 600 watt Sears Kenmore® microwave oven (model 877-8500) while positioned in a foamed polystyrene container, constructed so as to provide 12.7mm (1/2 in.) of polystyrene insulation around the sample with at least 6.4mm (1/4 in.) air gap around each face of the polycarbonate block. A foamed polystyrene cup containing 100 ml of room temperature tap water was placed on the floor of the oven in a rear corner to act as a dielectric load to protect the oven magnetron.

The microwave oven was operated at full power for one minute while the temperature of the lower block was monitored and recorded at ten second intervals. FIG. 3 shows the maximum temperature rise of the lower block during the test. It was observed that there was a net positive heat contribution resulting from each tape layer, up to four layers. Addition of layers in excess of four added little to heat contribution.

## Example 2

Tape was prepared as described in Example 1. Package samples were prepared using pouches, each 165mm x 203mm (6 1/2 in. x 8 in.) The pouches were prepared from 4.5 mil Scotchpak® heat sealable polyester film (type 48). Each sample pouch was loaded with a single WypAll® absorbent towel (Scott Paper Co.) and 100 milliliters of tap water, then heat sealed for four seconds with a Scotchpak® Pouch Sealer, Model 9062.

Two types of vents were prepared: One had a 25.4mm x 25.4mm (1 in. x 1 in.) single layer of tape and one had two superimposed layers of tape cut 25.4mm x 25.4mm (1 in. x 1 in.) thereby forming a composite. To prepare the test samples, a single vent was located at the approximate geometric center of a package wall. The vent, called a perforating vent, formed a hole in the wall of the heat sealable film due to softening that portion of the film beneath it due to microwave heating. Steam generated internally perforates the wall in the location of the vent. This is in contrast to a seam vent, wherein the vent tape is placed over a specific section of a heat-sealed seam.

The pouches with vents were placed on the floor of a 0.023m$^3$ (0.8 cu.ft.), 600 watt Sears Kenmore® brand microwave oven (model 877-8500) and heated for three minutes at full power. Of the single layer vents, two of six samples vented properly, of the double layer vents, six of six samples vented properly. Proper venting means that package perforation occurred within the area of the tape, thus allowing sufficient continuous release of steam to prevent package seam blow-out or package explosion.

A single layer configuration of tape did not supply sufficient heat to reliably vent the packages, while a double layer configuration of tape did perform acceptably and reliably.

## Claims

1. A microwave-absorbing composite comprising at least two zones (12,14) of material capable of absorbing microwave energy, each pair of said microwave energy absorbing zones being separated by a zone of material transparent to microwave energy, said composite having a layer of adhesive (20) on a major exterior surface thereof, provided that said composite is incapable of arcing in a microwave oven whereof the maximum power output does not exceed 2000 watts at a frequency of 2.45 GHz.

2. A composite according to claim 1 wherein said adhesive is a pressure-sensitive adhesive.

3. A composite according to claim 1 wherein said adhesive is a silicone-based adhesive.

4. A composite according to claim 1 wherein said adhesive is an acrylic-based adhesive.

5. A microwave absorbing composite comprising at least two zones (12,14) of material capable of absorbing microwave energy, each pair of said microwave energy-absorbing zones being separated by a zone of material transparent to microwave energy and one of said microwave energy-absorbing zones being on the exterior of the composite, provided that said composite is incapable of arcing in a microwave oven whereof the maximum power output does not exceed 2000 watts at a frequency of 2.45 GHz.

6. A microwave absorbing composite comprising at least three zones of material capable of absorbing microwave energy, each pair of said microwave energy absorbing zones being separated by a zone of material transparent to microwave energy, provided that said composite is incapable of arcing in a microwave oven whereof the maximum power output does not exceed 2000 watts at a frequency of 2.45 GHz.

7. A composite according to any preceding claim wherein said microwave energy-absorbing material comprises a metal.

8. A composite according to claim 7 wherein said metal is a vacuum deposited metal.

9. A composite according to any of claims 1 to 6 wherein said microwave energy-absorbing material comprises a metal oxide.

10. A composite according to any of claims 1 to 6 wherein said microwave energy-absorbing material comprises a dispersion of electrically conductive materials in a binder.

11. A composite according to any preceding claim wherein said material transparent to microwave energy comprises a polymer.

12. A composite according to claim 11 wherein said polymer is in the form of an extruded polymeric film.

13. A composite according to any of claims 1 to 10 wherein said zone of material transparent to microwave energy comprises paper.

14. A composite according to any preceding claim wherein there are up to ten zones of material capable of absorbing microwave energy.

15. A package having applied thereto a composite as claimed in any preceding claim.

16. A package as claimed in claim 15 wherein said composite is applied over a thermoplastic portion of said package.

17. A package as claimed in claim 15 wherein said composite is applied over a perforated portion of said package.

**Patentansprüche**

1. Mikrowellen absorbierender Verbundstoff, umfassend mindestens zwei Zonen (12, 14) von Material, das Mikrowellenergie absorbieren kann, wobei jedes Paar der Mikrowellenergie absorbierenden Zonen durch eine Zone eines Materials separiert ist, das für Mikrowellenergie transparent ist, wobei der Verbundstoff auf seiner größeren Außenseite eine Klebschicht (20) aufweist, vorausgesetzt, daß der Verbundstoff im Mikrowellenherd nicht zur Funkenbildung fähig ist, und wobei die maximale Ausgangsleistung bei einer Frequenz von 2,45 GHz 2.000 Watt nicht überschritten wird.

2. Verbundstoff nach Anspruch 1, bei welchem der Klebstoff ein Haftklebstoff ist.

3. Verbundstoff nach Anspruch 1, bei welchem der Klebstoff ein Klebstoff auf Silicon-Basis ist.

4. Verbundstoff nach Anspruch 1, bei welchem der Klebstoff ein Klebstoff auf Acryl-Basis ist.

**5.** Mikrowellen absorbierender Verbundstoff, umfassend mindestens zwei Zonen (12, 14) von Material, das Mikrowellenergie absorbieren kann, wobei jedes Paar der Mikrowellenergie absorbierenden Zonen durch eine Zone eines Materials separiert ist, das für Mikrowellenergie transparent ist, und sich eine der Mikrowellenergie absorbierenden Zonen auf der Außenseite des Verbundstoffs befindet, vorausgesetzt, daß der Verbundstoff im Mikrowellenherd nicht zur Funkenbildung fähig ist, und wobei die maximale Ausgangsleistung bei einer Frequenz von 2,45 GHz 2.000 Watt nicht überschritten wird.

**6.** Mikrowellen absorbierender Verbundstoff, umfassend mindestens drei Zonen von Material, das Mikrowellenergie absorbieren kann, wobei jedes Paar der Mikrowellenergie absorbierenden Zonen durch eine Zone eines Materials separiert ist, das für Mikrowellenergie transparent ist, vorausgesetzt, daß der Verbundstoff im Mikrowellenherd nicht zur Funkenbildung fähig ist, und wobei die maximale Ausgangsleistung bei einer Frequenz von 2,45 GHz 2.000 Watt nicht überschritten wird.

**7.** Verbundstoff nach einem der vorgenannten Ansprüche, bei welchem das Mikrowellenergie absorbierende Material ein Metall umfaßt.

**8.** Verbundstoff nach Anspruch 7, bei welchem das Metall ein im Vakuum abgeschiedenes Metall ist.

**9.** Verbundstoff nach Anspruch 1 bis 6, bei welchem das Mikrowellenergie absorbierende Material ein Metalloxid umfaßt.

**10.** Verbundstoff nach Anspruch 1 bis 6, bei welchem das Mikrowellenergie absorbierende Material eine Dispersion elektrisch leitfähiger Substanzen in einem Bindemittel umfaßt.

**11.** Verbundstoff nach einem der vorgenannten Ansprüche, bei welchem das für Mikrowellenergie transparente Material ein Polymer umfaßt.

**12.** Verbundstoff nach Anspruch 11, bei welchem das Polymer in Form eines extrudierten Polymerfilms vorliegt.

**13.** Verbundstoff nach Anspruch 1 bis 10, bei welchem die Zone des für Mikrowellenergie transparenten Materials Papier umfaßt.

**14.** Verbundstoff nach einem der vorgenannten Ansprüche, bei welchem es bis zu zehn Zonen von Material gibt, das Mikrowellenergie absorbieren kann.

**15.** Verpackung mit darauf aufgebrachtem Verbundstoff nach einem der vorgenannten Ansprüche.

**16.** Verpackung nach Anspruch 15, bei welcher der Verbundstoff über einem thermoplastischen Teil der Verpackung aufgebracht ist.

**17.** Verpackung nach Anspruch 15, bei welcher der Verbundstoff über einem perforierten Teil der Verpackung aufgebracht ist.

**Revendications**

**1.** Matériau composite absorbant les micro-ondes comprenant au moins deux zones (12, 14) de matière pouvant absorber l'énergie à micro-ondes, chaque paire desdites zones d'absorption d'énergie à micro-ondes étant séparée par une zone de matière transparente à l'énergie à micro-ondes, ce matériau composite comportant une couche d'adhésif (20) sur une de ses surfaces extérieures importantes, pour autant que ledit matériau composite soit non susceptible de s'allumer dans un four à micro-ondes dont la puissance fournie maximale n'excède pas 2000 watts à une fréquence de 2,45 GHz.

**2.** Matériau composite suivant la revendication 1, dans lequel l'adhésif est un adhésif sensible à la pression.

**3.** Matériau composite suivant la revendication 1, dans lequel l'adhésif est un adhésif à base de silicone.

**4.** Matériau composite suivant la revendication 1, dans lequel l'adhésif est un adhésif à base d'une matière acrylique.

**5.** Matériau composite absorbant les micro-ondes comprenant au moins deux zones (12, 14) de matière pouvant absorber l'énergie à micro-ondes, chaque paire desdites zones d'absorption d'énergie à micro-ondes étant séparée par une zone de matière transparente à l'énergie à micro-ondes et une de ces zones d'absorption d'énergie à micro-ondes étant à l'extérieur du matériau composite, pour autant que ce matériau composite soit non Susceptible de s'allumer dans un four à micro-ondes dont la puissance fournie maximale n'excède pas 2000 watts à une fréquence de 2,45 GHz.

**6.** Matériau composite absorbant les micro-ondes comprenant au moins trois zones de matière pouvant absorber l'énergie à micro-ondes, chaque paire desdites zones d'absorption d'énergie à micro-ondes étant séparée par une zone de matière transparente à l'énergie à micro-ondes, pour autant que ce matériau composite soit non susceptible de s'allumer dans un four à micro-ondes dont la puissance fournie maximale n'excède pas 2000 watts à une fréquence de 2,45 GHz.

**7.** Matériau composite suivant l'une quelconque des revendications précédentes, dans lequel la matière absorbant l'énergie à micro-ondes comprend un métal.

**8.** Matériau composite suivant la revendication 7, dans lequel le métal est un métal déposé sous vide.

**9.** Matériau suivant l'une quelconque des revendications 1 à 6, dans lequel la matière absorbant l'énergie à micro-ondes comprend un oxyde métallique.

**10.** Matériau composite suivant l'une quelconque des revendications 1 à 6, dans lequel la matière absorbant l'énergie à micro-ondes comprend une dispersion de matières électriquement conductrices dans un liant.

**11.** Matériau composite suivant l'une quelconque des revendications précédentes, dans lequel la matière transparente à l'énergie à micro-ondes comprend un polymère.

**12.** Matériau composite suivant la revendication 11, dans lequel le polymère est sous la forme d'une pellicule polymérique extrudée.

**13.** Matériau composite suivant l'une quelconque des revendications 1 à 10, dans lequel la zone de matière transparente à l'énergie à micro-ondes comprend du papier.

**14.** Matériau composite suivant l'une quelconque des revendications précédentes, dans lequel il y a jusqu'à dix zones de matière pouvant absorber l'énergie à micro-ondes.

**15.** Emballage sur lequel est appliqué un matériau composite suivant l'une quelconque des revendications précédentes.

**16.** Emballage suivant la revendication 15, dans lequel le matériau composite est appliqué sur une partie thermoplastique dudit emballage.

**17.** Emballage suivant la revendication 15, dans lequel le matériau composite est appliqué sur une partie perforée dudit emballage.

EP 0 312 333 B1

FIG. 1

FIG. 2

FIG. 3